# DEMANDE DE BREVET EUROPEEN

(11) **EP 1 005 212 A1**
(43) Date de publication de la demande: **31.05.2000**
(21) Numéro de dépôt: 99402758.9
(22) Date de dépôt: 05.11.1999
(51) Int. Cl.: H04M 1/72, H04M 1/21, G04G 7/02, G04G 5/00

(54) **Réseau téléphonique local à combinés gérés par une base et à horloges intégrées**

(30) Priorité: 20.11.1998 FR 9814626
(71) Demandeur: SAGEM SA, 75116 Paris (FR)
(72) Inventeur: Gadant, Hervé, 78300 Poissy (FR)
(74) Mandataire: Bloch, Gérard

(57) **Abrégé**

Le réseau téléphonique local comporte une pluralité de combinés téléphoniques (2) et une base (1) de gestion des combinés (2), et que chaque combiné (2) comporte une horloge (20, 21) agencée pour fournir l'heure à des moyens comparateurs (211) prévus pour être programmés par des moyens de saisie de données (24) du combiné (2) et pour actionner, lorsqu'il est l'heure programmée, des moyens de signalisation (26) signalant qu'il est l'heure programmée.

## Description

La présente invention concerne le domaine de la téléphonie chez l'abonné et plus précisément des installations téléphoniques comportant une base téléphonique reliée au réseau téléphonique et desservant une pluralité de combinés téléphoniques d'un réseau local, par exemple un réseau domotique sans fil.

On connaît des installations de ce type, dans lesquelles la base peut signaler, à tout utilisateur de combiné, que l'heure est celle qui a été programmée par celui-ci. En pareil cas, la base déclenche la sonnerie de tous les combinés à l'heure dite.

Une telle exploitation, non individualisée, n'est cependant pas satisfaisante puisque, par exemple, un utilisateur peut provoquer le réveil de tous les autres.

La présente invention vise à éviter ce genre d'inconvénient.

A cet effet, l'invention concerne un réseau téléphonique local comportant une pluralité de combinés téléphoniques et une base de gestion des combinés, caractérisé par le fait que chaque combiné comporte une horloge agencée pour fournir l'heure à des moyens comparateurs prévus pour être programmés par des moyens de saisie de données du combiné et pour actionner, lorsqu'il est l'heure programmée, des moyens de signalisation signalant qu'il est l'heure programmée.

Ainsi, les combinés étant personnalisés par une programmation spécifique, il n'y a pas d'interaction d'un utilisateur vers un autre et, en outre, plusieurs utilisateurs peuvent séparément disposer de ce service.

De préférence, les horloges des combinés sont agencées pour se synchroniser sur des signaux de rythme d'horloge, diffusés par un circuit d'horloge de la base, et pour se caler sur des signaux horaires diffusés par une horloge de la base.

Les combinés sont ainsi automatiquement synchronisés sur la base, ce qui permet de s'affranchir de circuits précis, dont coûteux, d'horloge dans les combinés.

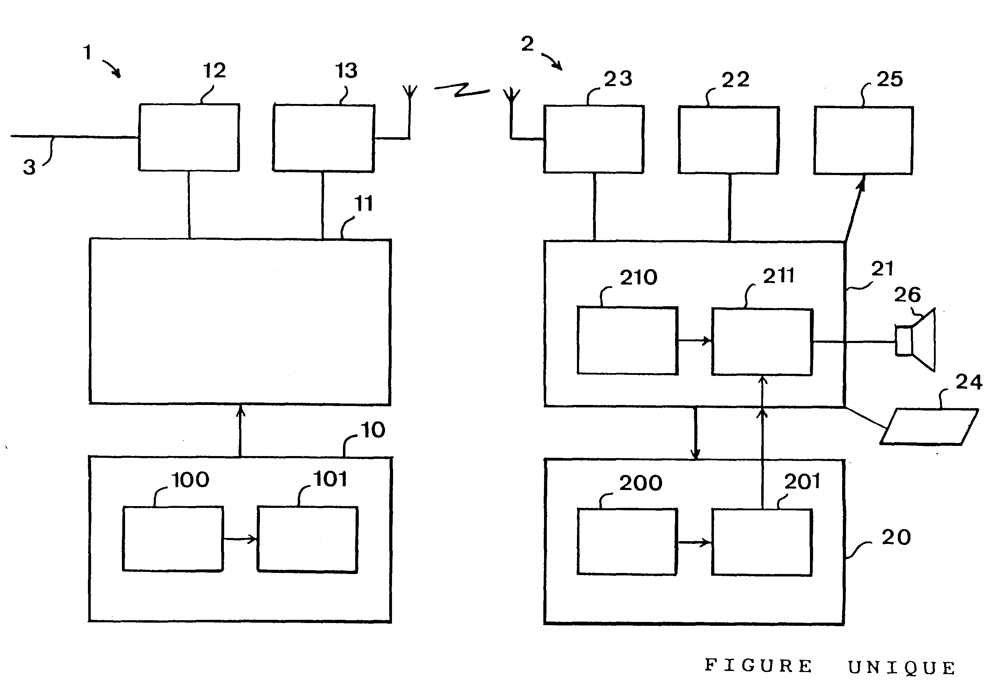

L'invention sera mieux comprise à l'aide de la description suivante d'une forme de réalisation préférée du réseau téléphonique de l'invention, en référence à la figure unique qui le représente schématiquement.

Le réseau représenté comporte une base 1 reliée à un réseau de transmission d'informations et plus précisément ici à une ligne 3 du réseau téléphonique commuté. La base 1 gère une pluralité de combinés téléphoniques, dont seul le combiné 2 est représenté, l'ensemble formant un réseau local domotique, ici à liaisons sans fil, entre la base 1 et les combinés 2, selon la norme radio DECT dans cet exemple.

La base 1 comporte une horloge électronique 10 comprenant un oscillateur ou circuit d'horloge 100, de fourniture de signaux périodiques d'horloge, et un diviseur de fréquence 101 commandé par l'oscillateur 100 et fournissant des signaux horaires. L'horloge 10 rythme le fonctionnement d'une unité centrale à microprocesseur 11. Un circuit 12 d'interface de ligne, pour la prise de ligne et l'émission et la détection de numérotation, relie la base 1 à la ligne 3, tandis qu'un circuit 13 d'interface radio, de sélection de voies temporelles de trames DECT, relie la base 1 aux terminaux comme 2. Le microprocesseur 11 est relié aux divers circuits pour les gérer et les mettre en liaison.

Une horloge électronique 20 est intégrée dans le terminal 2 et comprend un oscillateur ou circuit d'horloge 200, de fourniture de signaux périodiques d'horloge, commandant un diviseur de fréquence 201 fournissant des signaux horaires. L'horloge 20 rythme le fonctionnement d'une unité centrale à microprocesseur 21, comportant une mémoire vive 210 reliée en sortie à une entrée d'un comparateur 211 dont une autre entrée reçoit les signaux horaires, ou l'heure qu'il est, du diviseur 201 et dont la sortie commande un buzzer 26.

Les signaux horaires des diviseurs 101 et 201 fournissent chacun deux types d'informations : informations de rythme, pour faire fonctionner le microprocesseur associé et les autres circuits (interfaces et autres) à la cadence qui leur convient (fonctionnement matériel), et des informations de référence de temps, c'est-à-dire l'heure qu'il est, pour que les circuits prennent les décisions voulues à l'instant prévu (fonctionnement logiciel).

Hormis le buzzer 26, les organes de relations homme-machine comportent ici un clavier 24 de saisie de commandes de rappel de rendez-vous, ou réveil, et un écran 25 de contrôle des commandes. La référence 22 désigne les circuits téléphoniques classiques d'un tel combiné, géré par le microprocesseur 21, qui est relié à un circuit 23 d'interface radio DECT.

Le fonctionnement du système va maintenant être expliqué.

Les communications téléphoniques du combiné 2 sont établies de façon classique et une explication est donc superflue.

Pour programmer l'activation du buzzer 26 à une heure déterminée, l'utilisateur du terminal 2 programme, au clavier 24, l'heure qu'il souhaite et celle-ci est mémorisée dans la mémoire 210. Le comparateur 211 est alors activé pour comparer, en permanence ou cycliquement, l'heure qu'il est, ou heure courante, (201) et l'heure programmée à laquelle le buzzer 26 va devoir être activé pour, lorsqu'il est l'heure programmée, signaler à l'utilisateur qu'il est l'heure programmée. En pareil cas, le microprocesseur 21 maintient l'excitation du buzzer 26 pendant au maximum une durée déterminée puis l'arrête, si l'utilisateur ne l'a pas fait lui-même par le clavier 24.

Dans cet exemple, il est prévu d'asservir l'horloge 20 sur l'horloge 10. Cet asservissement présente les deux aspects évoqués plus haut pour le diviseur 201. Tout d'abord, l'oscillateur 200 est asservi en fréquence par des signaux radio provenant de l'oscillateur 100 et transmis par les interfaces 13 et 23. Un comparateur de phase, non représenté, compare la phase des signaux maîtres (100) reçus à celle des signaux esclaves (200) pour annuler l'écart de phase détecté et ainsi asservir ces derniers en fréquence, par commande du circuit oscillateur 200, du type à fréquence commandée par une tension (VCO). D'autre part, les signaux horaires du diviseur 101 (temps absolu) sont de même transmis au diviseur 201 pour l'asservir.

En pratique, ils peuvent avoir pour effet de faire varier la fréquence de l'oscillateur 200 pour accélérer ou ralentir le diviseur 101. Ils constituent en fait une extension de l'asservissement par comparaison de phase ci-dessus (limité à ± 180 degrés), l'écart numérique entre les diviseurs 101 et 201 représentant un multiple entier de périodes d'oscillateur (360 degrés). L'asservissement de fréquence du diviseur 200 exposé ci-dessus est alors intégré dans cet asservissement de temps absolu. En variante, il peut être prévu un forçage parallèle des valeurs voulues (101) dans le diviseur 201, par une rangée de portes, une par étage (bit) du diviseur 201, déverrouillées temporairement par un signal de télécommande, pour charger le contenu du diviseur 101 dans le diviseur 201 et ainsi caler celui-ci sur celui-là.

On notera que l'ensemble temporisateur constitué par la mémoire 210, le diviseur 201 et le comparateur 211 pourrait être remplacé par un temporisateur intégré, tel qu'il en existe dans les microprocesseurs, c'est-à-dire un compteur "chien de garde" armé pour produire un signal après une durée déterminée. En pareil cas, à réception d'une heure (et date) de réveil provenant du clavier 24, le microprocesseur 21 comparerait cette heure à l'heure courante pour en déterminer la durée d'attente et charger celle-ci dans le compteur. Ce dernier peut fonctionner en comptage jusqu'à atteindre la valeur de seuil, de durée d'attente, pour laquelle un comparateur signale cet événement, ou fonctionner en décomptage depuis la valeur de durée programmée, un détecteur de descente à zéro signalant de même cet événement.

Il peut par ailleurs être prévu une programmation d'heure relative, et non pas absolue comme précédemment, c'est-à-dire que le "chien de garde" ci-dessus est alors armé à partir du clavier 24 et programmé par celui-ci selon un délai d'attente déterminé, pour avertir l'utilisateur lorsque le délai correspondant s'est écoulé depuis l'instant de la programmation.

On conçoit que le buzzer 26 pourrait être complété ou remplacé par tout autre moyen de signalisation homme-machine, par exemple des circuits de synthèse vocale, un vibreur, une source lumineuse.

De même la saisie des heures peut être effectuée par tout autre moyen que le clavier 24 et par exemple par des circuits de reconnaissance vocale.

En ce qui concerne les aspects d'architecture des réseaux, externe 3 et local ou domotique, ici radio, leur nature, filaire ou non, n'intervient pas dans la présente invention. De même, le combiné téléphonique pourrait être remplacé par tout terminal de transmission de la voix ou de données relié à une base, ou commutateur téléphonique.

## Revendications

1. Réseau téléphonique local comportant une pluralité de combinés téléphoniques (2) et une base (1) de gestion des combinés (2), caractérisé par le fait que chaque combiné (2) comporte une horloge (20, 21) agencée pour fournir l'heure à des moyens comparateurs (211) prévus pour être programmés par des moyens de saisie de données (24) du combiné (2) et pour actionner, lorsqu'il est l'heure programmée, des moyens de signalisation (26) signalant qu'il est l'heure programmée.

2. Réseau selon la revendication 1, dans lequel les horloges (20) des combinés (2) comportent des circuits de synchronisation sur des signaux de rythme d'horloge diffusés par un circuit d'horloge (100) de la base (1).

3. Réseau selon la revendication 2, dans lequel les horloges (20) des combinés (2) sont agencées pour se caler sur des signaux horaires (101) diffusés par une horloge (10) de la base (1).

4. Réseau selon l'une des revendications 1 à 3, dans lequel les moyens de saisie comportent un clavier (24).

5. Réseau selon l'une des revendications 1 à 4, dans lequel les moyens de saisie comportent des circuits de reconnaissance vocale.

6. Réseau selon l'une des revendications 1 à 5, dans lequel il est prévu un écran de contrôle (25) associé aux moyens de saisie (24).

7. Réseau selon l'une des revendications 1 à 6, dans lequel les moyens de signalisation comportent un buzzer (26).

8. Réseau selon l'une des revendications 1 à 7, à liaisons combinés (2) - base (1) sans fil.
